# EUROPÄISCHE PATENTSCHRIFT

(11) **EP 0 362 189 B1**
(45) Veröffentlichungstag und Bekanntmachung des Hinweises auf die Patenterteilung: **11.05.1994**
(21) Anmeldenummer: 89890247.3
(22) Anmeldetag: 22.09.1989
(51) Int. Cl.: H04R 25/02, H01M 2/10

(54) **Batterieraum mit einer Kontaktanordnung**
Battery space with a contact arrangement
Compartiment de batterie avec un agencement de contacts

(30) Priorität: 29.09.1988 AT 2404/88
(43) Veröffentlichungstag der Anmeldung: 04.04.1990
(73) Patentinhaber: VIENNATONE Gesellschaft m.b.H., A-1164 Wien (AT)
(72) Erfinder: Hardt, Heinz, A-1060 Wien (AT); Wandl, Rudolf, A-1200 Wien (AT)
(74) Vertreter: Kliment, Peter, Dipl.-Ing.

(56) Entgegenhaltungen:
- WO-A-86/06919
- SCHMUCK & UHREN, Heft 23/24,Dezember 1980, Seiten 41-49, Ständiger Sonderteil; G. GLASOR et al.:"Konstruktiver Aufbau von Batteriehalterungen für klein- und gross- Uhren undsystematische Untersuchung aller für die Funktion wichtiger Einflussgrössen"

## Beschreibung

Die Erfindung bezieht sich auf einen Battereiraum mit einer Kontaktanordnung, insbsondere für ein Im-Ohr-Hörgerät gemäß dem Oberbegriff des Anspruches 1.

Eine solche Kontaktanordnung wurde z.B. durch die CH-PS 528 198 bekannt. Bei dieser bekannten Lösung ist eine mit einem Deckel verschließbare Aufnahme für die Batterie vorgesehen, in der eine V-förmig gebogene Feder angeordnet ist, die an dem Mittelbereich einer Stirnfläche der Batterie zur Anlage kommt. Die Batterie selbst ist dabei im beschlossenen Zustand der Aufnahme zwischen dieser Feder und dem Deckel der Aufnahme geklemmt, wobei der zweite Pol der Batterie mit einem Kontakt einer im Deckel angeordneten Leiterplatte in Berührung kommt. Die Verbindung des Deckels mit dem übrigen Gehäuse der Aufnahme der Batterie erfolgt mittels eines Bajonettverschlusses, der durch abgebogene Enden der V-förmigen Feder und einer weiteren Feder gebildet ist.

Der Nachteil diese bekannten Lösung liegt in der Anordnung der beiden Kontakte der Aufnahme in zwei voneinander getrennten Teilen, wodurch sich entsprechende Probleme bei der Verbindung der Federn mit der Leiterplatte ergeben, die über weitere Kontakte, die über den Bajonettverschluß geführt sind, ergeben. Damit ergibt sich eine entsprechend große Zahl an Kontaktstellen, die gerade bei den niedrigen Spannungen, mit denen z.B. in Hörgeräten gearbeitet wird, problematisch sind und eine Fehlerquelle darstellen.

Außerdem wurden durch die Zeitschrift "Schmuck & Uhren" Heft 23/24, Dezember 198, Seiten 41 bis 49 verschiedene Lösungsmöglichkeiten für die Ausbildung von Batterieräumen mit Kontaktanordnungen vorgeschlagen. Bei diesen bekannten Lösungen sind die die beiden Kontakte stets getrennt voneinander mit einem entsprechednen Träger verbunden und mit separaten Ausleitungen versehen. Dabei ist meist ein Kontakt am Boden des Batterieraumes angeordnet und der zweite ist als eine Art Brücke gestaltet, die die aufzunehmende Batterie gegen den Bodenkontakt drückt. Dabei muß jedoch der Brückenkontakt mit einer Schraube befestigt werden.

Eine solche Ausbildung ist zwar bei Uhren durchaus möglich, bei denen ein Batterietausch meist erst nach einem bis zwei Jahren und dann meist durch einen Fachmann erfolgt, nicht aber für Hörgeräte, bei denen eine Tausch der Batterie meist nach eienr bis zwei Wochen erfolgen muß, wobei dieser meist durch Ungeübte erfolgt.

Weiters sind aus dieser Zeitschrift auch Lösungen bekannt, bei denen ein Kontakt am Boden des Batterieraumes angeordnet ist und der zweite an einem die Öffnung desselben verchließenden Deckel. Dabei ergeben sich allerdings entsprechende Probleme mit den erforderlichen Ausleitungen, die entsprechend empfindlich geen eine mechanische Beschädigung sind. auch diese Lösungen sind kaum für einen häufigen Batterietausch durch Laien geeignet.

Weiters wurde durch die WO 86/06919 eine Lösung bekannt, bei der eine die Batterie umfassende, schwenkbare gehaltene Batterielade vorgesehen ist, die zwei getrennte federnde Kontakte benötigt, die getrennt voneinander im Batterieraum angeordnet sind. Dabei ist einer der Federkontakte V-förmig gebogen. Der Nachteil dieser bekannten Lösung besteht in der aufwendigen Formgebung der beiden relativ großen Kontakte und die kompliziert geformten Aufnahmen für dieselben. Außerdem ergibt sich schon allein durch die Ausbildung der schwenkbar gehaltenen Batterielade ein erheblicher konstruktiver Aufwand und ein entsprechender Platzbedarf , der allein schon durch die erforderliche Achse gegeben ist.

Ziel der Erfindung ist es diese Nachteile zu vermeiden und einen Batterieraum mit einer Kontaktanordnung der eingangs erwähnten Art vorzuschlagen, die eine platzsparende Anordnung der Batterie und leichtes Entfernen und Einsetzen der Batterie aus den bzw. in die Kontakte ermöglicht und die sich durch einen einfachen Aufbau auszeichnet.

Erfindungsgemäß wird dies bei einem Batterieraum mit Knontaktanordnung der eingangs erwähnten Art durch die kennzeichnenden Merkmale des Anspruches 1 erreicht.

Diese Maßnahmen ermöglichen es die Batterie einfach zwischen die Schenkel des ersten Kontaktes einzusetzen, wodurch sich automatisch der nötige Kontaktdruck aufgrund des Aufweitens der Feder an beiden Polen der Batterie aufbaut. Dabei wirkt der eine Schenkel der Feder beim Öffnen des Verschlusses des Batterieraumes gleichzeitig als Auswerfer für die Batterie, sodaß auf die bisher bei Knopfbatterien übliche Batterielade verzichtet werden kann, wodurch sich eine erhebliche Verringerung des Platzbedarfs ergibt. Außerdem kann der zweite, isoliert an der Feder angebrachte Kontakt sehr klein ausgebildet sein und braucht nicht unbedingt aus einem federnden Material hergestellt zu werden, da durch die V-förmige Kontaktfeder der nötige Kontaktdruck an beiden Polen der Batterie, z.B. am Gehäuse und am Deckel derselben aufgebracht werden kann.

Weiters ergibt sich bei den üblichen Knopfbatterien, bei denen das Gehäuse den einen Pol und der in dieses eingesetzte Deckel den anderen Pol bildet, bei einer erfindungsgemäßen Kontaktanordnung auch noch der Vorteil, daß ein falsches Einlegen einer Batterie in die V-förmige Feder lediglich dazu führt, daß von dieser keine Spannung abgegriffen werden kann. Eine falsche Polung des von der Batterie zu versorgenden Gerätes ist dagegen völlig ausgeschlossen, da bei falsch eingelegter Batterie die beiden Kontakte an der Mantelfläche und der Bodenfläche des Gehäuses und damit am selben Pol der Batterie anliegen. Bei dem zu versorgenden Gerät kann daher auf schaltungstechnische Maßnahmen zur Verhinderung einer falschen Polung verzichtet werden.

Bei einer bevorzugten Ausführungsform der Erfindung, bei der der eine Schenkel des ersten als V-förmige Feder ausgebildeten Kontaktes im Bereich des Bodens des Batterieraumes liegt, kann vorgesehen sein, daß dieser Schenkel mit dem zweiten Schenkel dieses Kontaktes, der entlang einer Wand des Batterieraumes verläuft, einen spitzen Winkel von vorzugsweise 75 bis 85° einschließt.

Bei einer entsprechenden Materialwahl für den ersten Kontakt lassen sich dabei relativ hohe Kontaktdrücke und ein sicheres Auswerfen der Batterie nach dem Öffnen des Batterieraumes sicherstellen.

Nach einem weiteren Merkmal der Erfindung kann vorgesehen sein, daß der an einer Wand des Batterieraumes anliegende Schenkel des ersten, als V-förmige Feder ausgebildeten Kontaktes seitliche Vorsprünge aufweist, die in hakenförmigen, aus der Wand des Batterieraumes vorragenden Vorsprüngen gehalten sind, die vorzugsweise gleichzeitig als Führungen für die aufzunehmende Batterie dienen.

Dies ermöglicht auf einfache Weise eine sichere Halterung des ersten Kontaktes. Gleichzeitig können die Vorsprünge so dimensioniert werden, daß die Knopfbatterien, bei denen der Deckel in der Regel gegenüber dem Rand des Gehäuses in axialer Richtung vorsteht, nur in einer bestimmten Weise in den Batterieraum eingelegt werden können, dessen Querschnitt im wesentlichen jenem der Knopfbatterien entspricht.

Gemäß einer weiteren Variante kann vorgesehen sein, daß der zweite Kontakt in einer parallel zum diesen haltenden Schenkel des ersten, als Feder ausgebildeten Kontaktes verlaufenden Ebene seitlich des ersten Kontaktes vorragt und in hakenförmigen, aus der Wand des Batterieraumes vorragenden Vorsprüngen gehalten ist, oder daß zwischen dem ersten und dem zweiten Kontakt ein Isolierkörper aus einen elastisch federnden Isolierstoff, wie z.B. Preßspan, angeordnet ist und in einer parallel zum diesen haltenden Schenkel des ersten, als Feder ausgebildeten Kontaktes verlaufenden Ebene seitlich des ersten Kontaktes vorragt und in hakenförmigen, aus der Wand des Batterieraumes vorragenden Vorsprüngen gehalten ist, wobei in jedem Falle der zweite Kontakt an der Innenseite des ersten, als Feder ausgebildeten Kontaktes unter Zwischenlage eines Isolierkörpers angeordnet ist.

In allen diesen Fällen ergibt sich eine sichere Halterung des ersten als V-förmige Feder ausgebildeten Kontaktes, wobei aber die Beweglichkeit des einen Schenkels des ersten Kontaktes erhalten bleibt.

Nach einem weiteren Merkmal der Erfindung kann vorgesehen sein, daß der zweite Kontakt ein mit einem entsprechenden, gegebenenfalls oberflächenveredelten Kontaktpunkt und einer entsprechenden, als Ausleitung dienenden Leiterbahn versehenen, vorzugsweise flexiblen Leiterplatte gebildet ist.

Ein solcher Kontakt kann einfach an dem einen Schenkel des ersten, als V-förmige Feder ausgebildeten Kontakt z.B. durch Klebung, befestigt werden, wobei sich bei dieser Ausführungsform der Vorteil einer mit dem Kontakt direkt verbundenen, bzw. einstückig mit diesem ausgebildeten Ausleitung ergibt. Außerdem wird dadurch auch ein besonders kompakter Aufbau des Batterieraumes ermöglicht, da in diesem kein Platz für eine Verbindung des zweiten Kontaktes mit seiner Ausleitung, z.B. in Form einer Lötstelle od. dgl. vorgesehen werden muß.

Die Erfindung wird nun anhand der Zeichnung näher erläutert. Dabei zeigen:
Fig. 1 schematisch ein Im-Ohr-Hörgerät mit Batterieraum,
Fig. 2 schematisch das Einsetzen einer Knopfbatterie,
Fig. 3 die Anordnung des zweiten Kontaktes in vergrößertem Maßstab,
Fig. 4 bis 6 schematisch verschiedenen Varianten der Halterung der Kontakte im Batterieraum, und
Fig. 6 eine weitere Variante der Ausbildung der Kontakte.

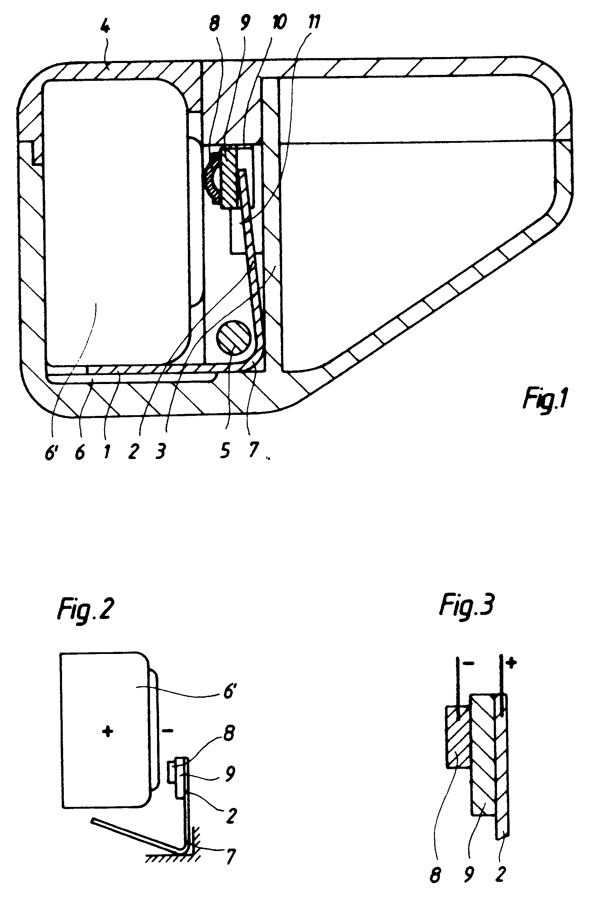

Die Fig. 1 zeigt schematisch ein Im-Ohr-Hörgerät mit Ober- und Unterteil, bei dem ein Batterieraum 6 durch eine Zwischenwand 3 vom übrigen Gehäuse abgetrennt ist. Dieser Batterieraum 6 ist mit einem schwenkbar gehaltenen Deckel 4 verschließbar, der gleichzeitig dazu dient die Batterie 6′ gegen den Boden des Batterieraumes 6 zu pressen.

Knapp oberhalb des Bodens des Batterieraumes 6 befindet sich ein Schenkel 1 eines als im entspannten Zustand V-förmige Feder ausgebildeten ersten Kontaktes 7, dessen zweiter Schenkel 2 im Bereich der Zwischenwand 3 verläuft und gegen einen Isolierkörper 9 drückt, der aus einem elastisch biegsamen Material, wie z.B. Preßspan od. dgl. besteht und der in seitlich des ersten Kontaktes 7 an der Zwischenwand 3 angeordneten, mit Schlitzen 10 versehenen, hakenförmigen Vorsprüngen 11, gehalten ist.

Dieser Isolierkörper 9 trägt den zweiten Kontakt 8 der in üblicher Weise mit einer nicht dargestellten Ausleitung versehen ist.

Um ein Herausfallen des ersten Kontaktes 7, der ebenfalls mit einer nicht dargestellten Ausleitung versehen ist, zu verhindern kann ein Zapfen 5 in den Batterieraum ragen, der jedoch die Beweglichkeit der Feder 7 nicht behindern darf.

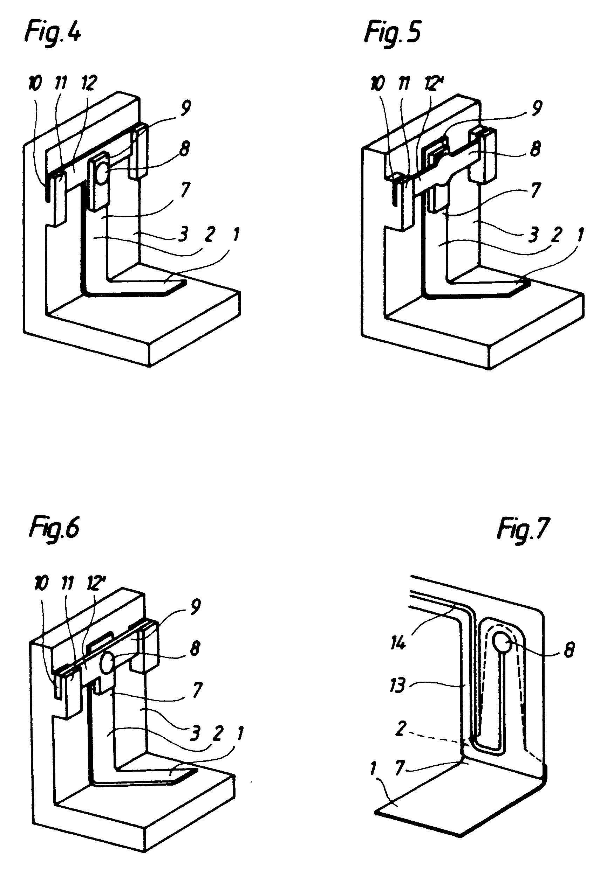

Dieser Zapfen kann entfallen, wenn wie in den Fig. 4 bis 6 dargestellt, die Feder 7 mit seitlichen Armen 12, 12′ gehalten ist. In diesem Falle wird die ganze Feder-Kontakt Kombination durch den Deckel 4 des Gerätes in den Schlitzen 10 der Vorsprünge 11 gehalten, wobei der Deckel 4 mit einem entsprechend geformten Rand an der Oberseite der Vorsprünge, an der die Schlitze 10 randoffen sind, aufliegen kann.

Wie aus der Fig. 1 zu ersehen ist, liegt der Kontakt 7 mit seinem einen Schenkel 1 am Mantel der Knopfbatterie 6′ an und preßt mit seinem zweiten Schenkel 2 den zweiten Kontakt 8 gegen den gegenüber dem Rand der Batterie axial vorstehenden Deckel derselben, wobei das Gehäuse und der Deckel der Batterie die Pole derselben darstellen. Dadurch ist ein Abgriff der Spannung der Batterie mittels der beiden Kontakte 7 und 8 möglich, allerdings nur bei richtig eingelegter Batterie.

Bei verkehrt eingelegter Batterie 6′ kämen die beiden Kontakte 7 und 8 am Boden des Gehäuses der Batterie und an deren Mantelfläche zur Anlage, die aber an dem selben Pol der Batterie liegen.

Aus Fig. 2 ist zu ersehen, daß es beim Einsetzen zu einem Anlegen der Batterie 6′ in den ersten, durch eine V-förmige Feder gebildeten Kontakt 7 kommt, wobei dieser elastisch aufgeweitet wird. Dies führt aber auch dazu, daß die Batterie beim Öffnen des Deckels 4 des Batterieraumes 6 durch die Federkraft des Kontaktes 7 gegen die Öffnung des Batterieraumes 6 geschoben wird und daher leicht entnommen werden kann. Damit erübrigt sich aber die bisher übliche Batterielade, die einen beträchtlichen Platz beansprucht hat.

Fig. 3 zeigt ein Detail einer erfindungsgemäßen Kontaktanordnung, bei der der Isolierkörper 9 direkt an dem Schenkel 2 des Kontaktes 7, z.B. durch Kleben, befestigt ist und der zweite Kontakt 8 auf dem Isolierkörper 9 sitzt.

Fig. 4 zeigt schematisch eine weitere Variante der Anordnung der Kontakte 7 und 8.

Bei dieser ist der Schenkel 2 des Kontaktes 7 mit in dessen Ebene seitlich abstehenden Armen 12 versehen, die in den Schlitzen 10 der Vorsprünge 11 der Zwischenwand 3 mit Spiel eingreifen. Bei eingesetzter Batterie 6′ und geschlossenem Deckel 4 des Batterieraumes 6 wölben sich die Arme 12 im Bereich des Schenkels 2, aufgrund der Spannung des als Feder ausgebildeten Kontaktes 7 vor, sodaß der Kontakt 8 gegen die Batterie 6′ gepreßt wird.

Bei der Ausführungsform nach der Fig. 5 ist der Kontakt 8 mit seitlichen Armen 12′ versehen, die in die Schlitze 10 der Vorsprünge 11 mit Spiel eingreifen. Dabei stellen die Arme 12′ Federteile dar, die ein elastisches Biegen ermöglichen. Dieser Kontakt 8 kann als loser Teil ausgebildet sein, der von dem Schenkel 2 des Kontaktes 7 unter Zwischenlage des Isolierkörpers 9, der zweckmäßigerweise an dem Schenkel 2 durch Klebung gehalten ist, kräftemäßig beaufschlagt wird.

Grundsätzlich kann der Kontakt 8 auch bei dieser Ausführungsform an dem Schenkel 2 mittelbar über den Isolierkörper 9 befestigt werden.

Bei der Ausführungsform nach der Fig. 6 ist der Isolierkörper 9′ mit seitlichen Armen 12′versehen, die in die Schlitze 10 der Vorsprünge 11 eingreifen, wobei der Isolierkörper 9 aus einem elastisch federnden Material besteht.

Auf diesem Isolierkörper 9′ist der Kontakt 8 gehalten, der aufgrund der Durchbiegung des Isolierkörpers 9′ bei eingesetzter Batterie 6′ und geschlossenem Deckel 4 an der Batterie 6′ zur Anlage kommt.

Die Vorsprünge 11 können auch in den Kantenbereichen des im wesentlichen quaderförmigen Batterieraumes 6 angeordnet sein, wobei der Querschnitt des Batterieraumes im wesentlichen dem Querschnitt der aufzunehmenden Batterien entspricht. In diesem Falle ergibt sich eine günstige Anordnung im Hinblick auf eine leichte Durchbiegung der Arme 12, 12′ des Schenkels 2 bzw. des Kontaktes 8 oder des Isolierkörpers 9 und außerdem besteht die Möglichkeit diese Vorsprünge so zu dimensionieren, daß deren Breite im wesentlichen der Dicke des zwischen dem erhöhten Deckel der Batterie und deren äußerer Mantelfläche verbleibenden Kreisringes entspricht.

Damit ist es möglich ein falsches Einlegen der Batterie auszuschließen.

Bei der Ausführungsform nach der Fig. 7 ist der Kontakt 8 auf einer flexiblen Leiterplatte 13 angeordnet, die an dem Schenkel 2 des Kontaktes 7 gehalten ist. Dabei ist der Kontakt 8 einstückig mit einer als Leiterbahn ausgebildeten Ausleitung 14 verbunden. Der ebenfalls als Leiterbahn ausgebildete Kontakt 8 ist dabei zweckmäßigerweise oberflächenveredelt.

Bei dieser Ausführungsform ist es möglich diese flexible Leiterplatte, die auch ein einfaches Verlegen der Ausleitung 14 ermöglicht, im Bereich des Kontaktes 7 lose an diesen anzulegen.

## Patentansprüche

1. Batterieraum mit einer Kontaktanordnung, insbesondere für Im-Ohr-Hörgeräte, welcher Batterieraum (6) eine mit einem Deckel (4) verschließare Öffnung aufweist und zur Aufnahme einer Knopfzellen-Batterie (6') dient, wobei der Querschnitt des Batterieraumes (6) im wesentlichen jenem der aufzunehmenden Batterie (6') entspricht und die Kontaktanordnung zwei an den Polen der Batterie (6') zur Anlage kommende Kontakte (7,8) aufweist, von denen mindestens einer als V-förmig gebogene Feder (7) ausgebildet ist, die beim Einsetzen der Batterie (6') entgegen ihrer Vorspannung auslenkbar ist und deren einer Schenkel (2) der Öffnung des Batterieraumes (6) gegenüberliegt und die Batterie gegen eine bestimmte Stellung vorspannt, **dadurch gekennzeichnet**, daß der zweite Kontakt (8) in einem Endbereich des einen Schenkels (2) des durch die V-förmige Feder gebildeten Kontaktes (7) isoliert gehalten ist, wobei der zweite Kontakt (8) im vom Verbindungsbereich der beiden Schenkel (1, 2) des ersten Kontaktes (7) abgekehrten Endbereich angeordnet ist und die beiden Schenkel (1, 2) der den ersten Kontakt (7) bildenden V-förmigen Feder im Inneren des Batterieraumes angeordnet sind.

2. Batterieraum nach Anspruch 1, in dem der eine Schenkel des als V-förmige Feder ausgebildeten Kontaktes im Bereich des Bodens des Batterieraumes liegt,
**dadurch gekennzeichnet**, daß dieser Schenkel (1) mit dem zweiten, entlang einer Wand des Batterieraumes verlaufenden Schenkel (2), des als V-förmige Feder ausgebildeten Kontaktes (7) einen spitzen Winkel von vorzugsweise 75 bis 85° einschließt.

3. Batterieraum nach Anspruch 1 oder 2, **dadurch gekennzeichnet**, daß der an einer Wand des Batterieraumes (6) anliegende Schenkel (2) des ersten, als V-förmige Feder ausgebildeten Kontaktes (7) seitliche Arme (12) aufweist, die in hakenförmigen, aus der Wand des Batterieraumes (6) vorragenden Vorsprüngen (11) gehalten sind, die vorzugsweise gleichzeitig als Führungen für die aufzunehmende Batterie (6') dienen.

4. Batterieraum nach einem der Ansprüche 1 bis 3, **dadurch gekennzeichnet**, daß der zweite Kontakt (8) an der Innenseite des ersten, als V-förmige Feder ausgebildeten Kontaktes (7) unter Zwischenlage eines Isolierkörpers anliegt oder dort angeordnet ist.

5. Batterieraum nach Anspruch 4, **dadurch gekennzeichnet**, daß der zweite Kontakt (8) in einer parallel zum diesen haltenden Schenkel (2) des ersten, als V-förmige Feder ausgebildeten Kontaktes (7) verlaufenden Ebene seitlich des ersten Kontaktes (7) vorragt und in hakenförmigen, aus der Wand des Batterieraumes (6) vorragenden Vorsprüngen (11) gehalten ist.

6. Batterieraum nach Anspruch 4, **dadurch gekennzeichnet**, daß zwischen dem ersten (7) und dem zweiten Kontakt (8) ein Isolierkörper (9) aus einem elastisch federnden Isolierstoff, wie z.B. Preßspan, angeordnet ist und in einer parallel zum diesen haltenden Schenkel (2) des ersten, als Feder ausgebildeten Kontaktes (7) verlaufenden Ebene seitlich des ersten Kontaktes 87) vorragt und in hakenförmigen, aus der Wand des Batterieraumes (6) vorragenden Vorsprüngen (11) gehalten ist.

7. Batterieraum nach einem der Ansprüche 1 bis 6, **dadurch gekennzeichnet**, daß der zweite Kontakt (8) ein mit einem entsprechenden, gegebenenfalls oberflächenveredelten Kontaktpunkt und einer entsprechenden, als Ausleitung (14) dienenden Leiterbahn versehen, vorzugsweise flexiblen Leiterplatte (13) gebildet ist.

## Claims

1. A battery chamber with a contact arrangement, in particular for hearing aids carried in the ear, which battery chamber (6) comprises an opening closable with a lid (4) and which is used for receiving a battery cell (6'), with the cross section of the battery chamber (6) being substantially equivalent to that of the battery (6') to be received, and the contact arrangement is provided with two contacts (7, 8) for coming into contact with the poles of the battery (6'), of which at least one is arranged as a V-shaped bent spring (7) which is deflectable against its pretension on inserting the battery (6') and whose one leg (2) is opposite of the opening of the battery chamber (6) and pretensions the battery towards a specific position, characterized in that the second contact (8) is held in an insulated manner in an end zone of the one leg (2) of the contact (7) formed by the V-shaped spring, with the second contact (8) being arranged in the end zone averted from the connecting zone of the two legs (1, 2) of the first contact (7) and the two legs (1, 2) of the V-shaped spring forming the first contact (7) being arranged in the interior of the battery chamber.

2. A battery chamber as claimed in claim 1, in which the one leg of the contact arranged as a V-shaped spring lies in the zone of the floor of the battery chamber, characterized in that said leg (1) forms an acute angle of preferably 75 to 85° with the second leg (2), which extends along a wall of the battery chamber, of the contact (7) formed as a V-shaped spring.

3. A battery chamber as claimed in claim 1 or 2, characterized in that the leg (2), which sits close to a wall of the battery chamber, of the first contact (7) which is arranged as a V-shaped spring is provided with lateral arms (12) which are held in hook-like projections (11) projecting from the wall of the battery chamber (6), which projections are preferably used simultaneously as guiding means for the battery (6') to be received.

4. A battery chamber as claimed in one of the claims 1 to 3, characterized in that the second contact (8) sits close to or is arranged on the inner side of the first contact (7) arranged as a V-shaped spring by interposing an insulating body.

5. A battery chamber as claimed in claim 4, characterized in that the second contact (8) projects in a plane laterally of the first contact (7) parallel to the leg (2), which holds said second contact, of the first contact (7) arranged as a spring and is held in hook-like projections (11) projecting from the wall of the battery chamber (6).

6. A battery chamber as claimed in claim 4, characterized in that between the first (7) and the second contact (8) there is arranged an insulating body (9) made from an elastically resilient insulating material such as glazed insulating pressboard, for example, and that it projects in a plane laterally of the first contact (7) parallel to the leg (2), which holds it, of the first contact (7) arranged as a spring and that it is held by hook-like projections (11) projecting from the wall of the battery chamber (6).

7. A battery chamber as claimed in one of the claims 1 to 6, characterized in that the second contact (8) is formed by a respective contact point, which is optionally surface refined, and by a respective strip conductor used as an output line (14), preferably a flexible circuit board (13).

## Revendications

1. Compartiment de pile muni d'un dispositif de contact, notamment pour prothèse auditive intra-auriculaire, lequel compartiment de pile (6) comprend une ouverture pouvant être fermée par un couvercle (4) et sert à contenir une pile bouton (6'), la section du compartiment de pile (6) correspondant sensiblement à celle de la pile (6') à y loger, le dispositif de contact comprenant deux contacts (7, 8) qui viennent s'appuyer sur les pôles de la pile (6'), dont au moins l'un est constitué par un ressort (7) replié en V, qui peut s'ouvrir à l'encontre de sa précontrainte lors de la mise en place de la pile (6') et dont une branche (2) fait face à l'ouverture du compartiment de pile (6), et applique la pile contre une position déterminée avec précontrainte, caractérisé en ce que le deuxième contact (8) est tenu isolé dans une région terminale d'une branche (2) du contact (7) formé par le ressort en V, le deuxième contact (8) étant disposé dans la région terminale qui est éloignée de la région de liaison des deux branches (1, 2) du premier contact (7), et les deux branches (1, 2) du ressort en V qui forme le premier contact (7) étant disposées à l'intérieur du compartiment de pile.

2. Compartiment de pile selon la revendication 1, dans lequel l'une des branches du contact formé du ressort en V se trouve dans la région de fond du compartiment de pile, caractérisé en ce que cette branche (1) forme un angle aigu, de préférence de 75 à 85°, avec la deuxième branche (2) du contact (7) formé d'un ressort en V qui s'étend le long d'une paroi du compartiment de pile.

3. Compartiment de pile selon la revendication 1 ou 2, caractérisé en ce que la branche (2) du premier contact (7) formé d'un ressort en V qui est appliquée contre une paroi du compartiment de pile (6) présente des bras latéraux (12) qui sont tenus dans des protubérances (11) en forme de crochet, qui font saillie sur la paroi du compartiment de pile (6) et qui, de préférence, servent en même temps de guides pour la pile (6') à loger.

4. Compartiment de pile selon une des revendications 1 à 3, caractérisé en ce que le deuxième contact (8) est appuyé contre la face interne du premier contact (7), formé d'un ressort en V, avec interposition d'un corps isolant ou est disposé à cet endroit.

5. Compartiment de pile selon la revendication 4, caractérisé en ce que le deuxième contact (8) fait saillie latéralement au premier contact (7) dans un plan s'étendant parallèlement à la branche (2) du premier contact (7), formé d'un ressort en V, qui le tient, et est retenu dans des protubérances (11) en forme de crochet qui font saillie sur la paroi du compartiment de pile (6).

6. Compartiment de pile selon la revendication 4, caractérisé en ce qu'entre le premier contact (7) et le deuxième contact (8), est disposé un corps isolant (9) fait d'une matière isolante élastique formant ressort telle que, par exemple, du Presspahn, et fait saillie latéralement au premier contact (7) dans un plan s'étendant parallèlement à la branche (2) du premier contact (7) formé d'un ressort, qui le tient, et est retenu dans des protubérances (11) en forme de crochet qui font saillie sur la partie du compartiment de pile (6).

7. Compartiment de pile selon une des revendications 1 à 6, caractérisé en ce que le deuxième contact (8) est constitué par un circuit imprimé (13), de préférence flexible, muni d'un point de contact correspondant, éventuellement traité en surface et d'une piste conductrice correspondante, servant de conducteur de sortie (14).
